Europäisches Patentamt

**European Patent Office**

**Office européen des brevets**

(11) Publication number: **0 145 474**
A2

# EUROPEAN PATENT APPLICATION

(21) Application number: **84308566.3**

(22) Date of filing: **10.12.84**

(51) Int. Cl.⁴: **B 42 D 15/02**, G 06 K 19/08

(30) Priority: **13.12.83 US 561097**

(43) Date of publication of application: **19.06.85**
**Bulletin 85/25**

(84) Designated Contracting States: **AT BE DE FR GB NL SE**

(71) Applicant: **COMPUTER IDENTIFICATION SYSTEMS, INC., 874- 57th Street, Sacramento California 95819 (US)**

(72) Inventor: **Phelps, Barry C., 2638 Kadema Drive, Sacramento, California 95825 (US)**

(74) Representative: **Newstead, Michael John et al, Page & Co. Temple Gate House Temple Gate, Bristol BS1 6PL (GB)**

(54) **Protectively covered identification card.**

(57) A protectively covered identification card (10) has an opaque top layer (28) disposed to cover at least a portion of a translucent or opaque bottom layer (22) with engraved scores (32) extending through the top layer into the bottom layer. A thin cover layer (34) extends over the entire top surface of the top and bottom layers. Printed matter (20) can be placed on either or both surfaces of the thin cover layer in the form of bendet patterns, printed information or holographic images to form a composite foreground.

1.

PROTECTIVELY COVERED IDENTIFICATION CARD

Background Of The Invention

The present invention relates to identification cards and more particularly to an engraved identification card having a protective covering which inhibits unauthorized changes.

Engraved identification cards are well known in the art and can be made by utilizing any one of a number of available electronic engraving techniques. Such techniques are disclosed in Noda, et al., U.S. Patent No. 3,950,609 and Wada, et al., U.S. Patent No. 4,052,739. Utilizing these or similar engraving techniques, an image can be engraved on a card blank by making a multiplicity of scores through an opaque colored top layer of the card into a second opaque or translucent bottom layer. By varying the depth of the scoring, the width of the region between scores can be varied to generate light and dark regions which, when viewed as a composite, forms the desired image.

Various identification images such as the user's picture, signature, finger print or other identifying mark can be engraved onto card to produce an identification card unique for each cardholder. Engraved identification cards are shown in Oka, et al., U.S. Patent No. 3,897,964 and Oka, et al., U.S. Patent No. 3,930,924.

While such engraved identification cards enhance security by providing an unique card for each cardholder, it is desired to increase the difficulty of altering such a card and thereby further enhance security and inhibit the possibility of unnoticed making alterations on the card.

The present invention helps prevent alterations from occurring on the identification card by placing a thin, clear protective layer over the engraved surface of the card. Such a thin cover layer permits the engraved image to be protectively covered while still permitting the engraved region to be felt through the protective cover layer.

The protective cover layer produces a protective sheen which extends over the entire surface of the card. Thus, if the engraved image should be scraped from the card, the protective cover and its characteristic homogeneous luster would also be removed. One attempting to re-engrave or reprint another image would thus be required to cover the new image with similar layer.

Alternatively, printed matter in the form of a bendet pattern, holographic image, or the like, can be placed on the cover layer in order to create a composite image over the surface of

0145474

the card. A person would, therefore, not only to replace the original engraving with a bogus engraving, but would also be required to reimprint the portion of the pattern in proper spacial orientation and alignment with the undamaged pattern which would remain on the surface of the card. Thus, by utilizing such a pattern on the cover layer, it would be extremely difficult for one to properly reconstruct the repeating pattern in its proper coloration and alignment.

The present invention provides a card which can be easily tested for authenticity without the need for special equipment or user training. For example, if the engraved image is removed from the card and replaced with a re-engraved or reprinted image, one would only have to look at the texture and sheen which extends over the entire surface of the card in order to determine if the card has been tampered with. Additionally, one need only feel the characteristic texture of the engraved region of the card in order to determine if a new cover layer had been relaminated over the engraved region. A person finding a card which lacks this characteristic textured pattern would then be aware that the card had been altered.

## Summary of the Invention

A protectively covered identification includes an opaque top layer disposed to cover at least a portion of a translucent or opaque bottom layer. An identifying image for each cardholder (for example the cardholder's picture or signature) is engraved through the top layer into the bottom layer. A thin cover layer, which extends over the entire top layer, is sufficiently thin to permit the characteristic texture of the engraved region to be felt through the cover layer upon touch. The cover layer provides a protective layer which makes removal of the engraved region and the reprinting of a new image in its place more difficult and would likely result in a visually defective card.

In another embodiment of this invention, printed matter such as a bendet pattern or a holographic image can be placed on one of the surfaces of the thin cover layer prior to the affixation of the layer to the top surface of the card. This creates a unitary pattern or patterns which extend throughout the non-engraved and engraved portion of the card. Thus, one removing the engraved portion of the card would also remove the repeating pattern. Therefore, this repeating pattern would also have to be duplicated and properly aligned with the remaining pattern on the card in order to create an authentic looking card. By placing intricate patterns on the cover layer, the difficulty of duplicating the pattern in correct alignment would be greatly increased.

Alternatively, the cover layer can be a clear, transparent layer or it can be a lightly tinted translucent layer. The printed matter placed on the cover layer can comprise of bendet patterns, written information or holographic images, or any combination thereof. The printed matter can be imprinted using standard printing processes or by using holographic techniques. Also, the printing can be formed using inks such as ultraviolet inks which are incapable of being reproduced either photographically or by photocopying means.

Brief Description Of The Drawings

A complete understanding of the present invention and other advantages and features thereof may be gained from a consideration of the following description of the preferred embodiments taken in conjunction with the accompanying drawings in which:

Figure 1 is a front view showing the composite image of the protectively covered identification card in accordance with the present invention; and

Figure 2 is an exaggerated exploded cross-sectional side plan view of a protectively covered identification card such as that shown in Figure 1; and

Figure 3 is a cross-sectional side plan view showing the transparent cover layer as it is affixed to the engraved region of the card.

## Detailed Description Of The Preferred Embodiment

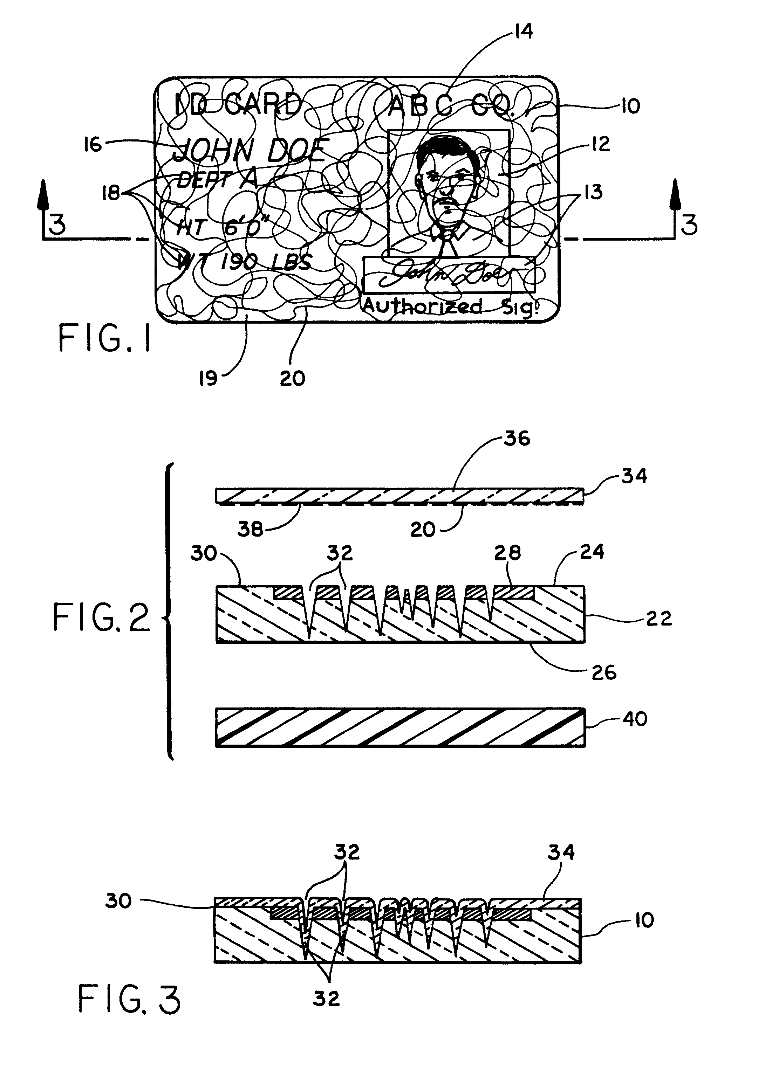

Referring initially to Figure 1, a protectively covered identification card 10 has an engraved region 12 which contains identification images 13, such as the user's picture and signature, and possibly a non-engraved region which may provide other information such as a company name 14, the user's name 16 and other identification information 18. Printed matter 20, such as the pebble grain pattern, appears over the entire surface 19 of the card 10.

Referring now to Figure 2, the card 10 comprises a bottom layer 22 having first surface 24 and a second surface 26 opposite the first surface 24. The bottom layer 22 can be either a translucent or an opaque material. An opaque top layer or inset 28 is disposed on the first surface 24 to define a continuous major surface 30. Engraved scores 32 extend through the top layer 28 into the bottom layer 22 to form the engraved images 13 shown in Figure 1. The scores 32 are engraved into the top layer 28 and bottom layer 22 at varying depths so that greater the depth of the score 32, the more top layer 28 will be removed and hence, the more bottom layer 22 will be exposed. As the depth of the score 32 decreases, a greater amount of the top layer 28 adjacent the score remains, thus forming light and dark regions which, when viewed as a composite, forms the desired image.

Directly above the first major surface 30 of the card 10 is a thin cover layer 34 having a top surface 36 and a bottom surface 38. The cover layer 34 is translucent which, in the present application includes complete transparency as well as partial light transmissiveness. The top surface 36 and bottom surface 38 can have the printed matter imprinted on either or both of these surface areas. For example, the printed matter 20 on surface 38 may be a pebble grain pattern which is seen in Figure 1 or it can be any type of repeating or bendet pattern which would be appropriate for the desired use. However, it is preferable to have a somewhat intricate or unique pattern placed on at least one of the surfaces 36 or 38 in order to create a pattern which will be more difficult to duplicate.

Referring now to Figure 3, the cover layer 34 can be seen affixed within the engraved region 12 of the card 10. The cover layer 34 is not a continuous planar lamina which covers the engraved region 12, but rather extends down into the recesses of the scores 32. This feature permits the scores 32 to be felt on the major surface 30 of the card 10.

In another embodiment of the invention, an opaque bottom layer 40 which is seen in Figure 2, can be placed beneath the translucent bottom layer 22 in order to provide a contrasting background to the engraved image and printed pattern which is contained on the other layers. This bottom layer 36 is affixed to the second surface 26 by a suitable bonding means. Alternatively, this opaque bottom layer 40 can have additional written information, designs or patterns imprinted on it to enhance the composite image of the card.

Still another embodiment of the invention utilizes a bottom layer 22 which comprises of an opaque colored material, rather than a translucent material. This opaque bottom layer 22 can consist of a color which is different from the color of the opaque top layer 28 in order to provide a proper color contrast between the two layers.

The opaque and translucent layers used in this embodiment may be polyvinyl chloride (PVC). The opaque top layer 28 can be made from a plastic, ink or other suitable opaque material, while the bottom layer 22 can be of translucent or opaque polyvinyl chloride. The thickness of the top layer 28 and bottom layer 22 should be sufficient to permit the multiple scores 32 to be enraved therein. The thin cover layer 34 can be made out of a polyvinyl chloride material or a similar material. However, it is preferred that the cover layer 34 be as thin as one mil or less.

The cover layer 34 can be applied to and adhered to the first major surface 30 by heat bonding or fusing the two layers together using suitable techniques well known in the art. By utilizing heat bonding techniques, the heating of the cover layer 34 will facilitate the movement or flow of the cover layer 34 into the scores 32 of the card 10 (as is seen in Figure 3).

9.

The opaque bottom layer 40 can be applied to the second surface 26 of the bottom layer 22 by using a suitable colorless transparent adhesive such as PVC adhesive which is well known in the art, or it too can be heat bonded or fused together using suitable bonding techniques well known in the art.

Prior to bonding the cover layer 34 to the major surface 30, the bottom surface 38 may be imprinted with the desired pattern or printed information by using well known printing techniques and may use printers ink or an ultraviolet ink such as Armstrong Reflectolon, an ink manufactured by the Armstrong Company. The top surface 36 could additionally be imprinted with a desired pattern either before or after the cover layer 34 is placed upon the first major surface 30  to form a composite pattern.  If it is desired, holographic images or patterns can also be placed on the top or bottom surfaces 36 and 38 of the cover layer 34 using holographic techniques well known in the art.

In using the protectively covered identification card, it is desirable to check the patterns placed on the cover layer of the card in order to determine whether the pattern has been broken or otherwise blemished.  This can usually be done by visual sight.  Once a pattern appears to have been broken, erased or does not properly align with the pattern on the engraved region of the card, one should then know that the card has been tampered with and that a bogus image has

10.

been re-engraved upon the card. Also, the engraved region can be felt in order to see if the characteristic texture created by the scoring is present. If the area of the engraved region is smooth or does not otherwise have the characteristic texture, the person would be alerted that the card may have been tampered with.

Although the embodiment disclosed herein is representative of the present invention, the elements comprising the invention can assume a wide variety of different forms, some of which can be quite different from the embodiment disclosed herein.

CLAIMS:

1.    A protectively covered identification card comprising:

a translucent bottom layer having a first surface and an second surface;

an opaque top layer disposed to cover at least a portion of the first surface of the bottom layer, the top layer and the first surface defining a first major surface, wherein a plurality of engraved scores extend through the top layer into the bottom layer to form an engraved image; and

a translucent cover layer having a top surface and a bottom surface, the bottom surface being disposed on the first major surface, the cover layer being such as to extend into the engraved scores so that the engraved scores can be felt through the cover layer.

2.    A protectively covered identification card as defined in claim 1 wherein the cover layer has a thickness less than about 1 mil.

3.    A protectively covered identification card as defined in claim 1 or 2 further comprising printed matter imprinted on at least one of the top and bottom surfaces of the cover layer.

12.

4. A protectively covered identification card as defined in claim 3 wherein the printed matter is imprinted on both the top and bottom surface of the cover layer.

5. A protectively covered identification card as defined in claim 3 wherein the printed matter is imprinted on the bottom surface of the cover layer.

6. A protectively covered identification card as defined in any of claims 3 to 5 wherein the printed manner on at least one of the top and bottom surfaces comprises a bendet pattern.

7. A protectively covered identification card as defined in any of claims 3 to 5 wherein the printed matter on at least one of the top and bottom surfaces comprises a holographic pattern.

8. A protectively covered identification card as defined in any preceding claim further comprising an opaque layer affixed to the second surface of translucent bottom layer.

9. A protectively covered identification card comprising:

an opaque bottom layer having a first surface and a second surface;

an opaque top layer disposed to cover at least a portion of the first surface of the bottom layer, the top layer having an opaque color different from the opaque bottom layer, the top layer and the first surface defining the first major surface, wherein a plurality of engraved scores extend through the top layer into the bottom layer to form an engraved image; and

a translucent cover layer having a top surface and a bottom surface, the bottom surface being disposed on the first major surface, the cover layer being such as to extend into the engraved scores so that the engraced scores can be felt through the cover layer.

10. A protectively covered identification card as defined in claim 9 wherein the cover layer has a thickness less than about 1 mil.

11. A protectively covered identification card as defined in claim 9 or 10 further comprising printed matter imprinted on at least one of the top and bottom surfaces of the cover layer.

12. A protectively covered identification card as defined in claim 11 wherein the printed matter on at least one of the top and bottom surfaces of the cover layer comprises a bendet pattern.

14.

13. A protectively covered identification card as defined in claim 11 wherein the printed matter on at least one of the top and bottom surfaces of the cover layer comprises a holographic pattern.

14. A protectively covered identification card comprising:

a translucent bottom layer having a first surface and a second surface;

an opaque top layer disposed to cover at least a portion of the first surface of the bottom layer, the top layer and first surface defining a first major surface, wherein a plurality of engraved scores extend through the top layer into the bottom layer to form an engraved image;

a translucent cover layer having a top surface and a bottom surface, the bottom surface being disposed on the first major surface, the cover layer being such as to extend into the engraved scores so that the engraved scores can be felt through the cover layer; and

printed matter imprinted on the bottom surface of the cover layer.

15. A protectively covered identification card as defined in claim 14 wherein the covered layer has a thickness less than about 1 mil.

15.

16.  A protectively covered identification
card as defined in claim 14 or 15 further comprising an
opaque layer affixed to the second surface of the
bottom layer.

0145474
1/1

FIG.1

FIG.2

FIG.3